# EUROPEAN PATENT APPLICATION

(11) **EP 1 595 850 A1**
(43) Date of publication of application: **16.11.2005**
(21) Application number: 04710476.5
(22) Date of filing: 12.02.2004
(51) Int. Cl.: C02F 1/44, B01D 61/02, B01D 61/14, C02F 1/04

(54) **METHOD OF DESALTING**

(30) Priority: 14.02.2003 JP 2003037170
(71) Applicant: Dainichiseika Color & Chemicals Mfg. Co., Ltd., Chuo-ku Tokyo 103-8383 (JP)
(72) Inventor: SUGITO, Yoshifumi, c/o Dainichiseika Mfg. Co., Ltd, Tokyo 103-8383 (JP); TAKIZAWA, Minoru, c/o Dainichiseika Mfg. Co., Ltd, Tokyo 103-8383 (JP); ISONO, Yasuyuki, c/o Dainichiseika Mfg. Co., Ltd, Tokyo 103-8383 (JP); SAJI, Mikio, c/o Dainichiseika Mfg. Co., Ltd, Tokyo 103-8383 (JP); FUKASAWA, Masayuki, c/o Dainichiseika Mfg. Co. Ltd, Tokyo 103-8383 (JP); KANAO, Shinzo, c/o Dainichiseika Mfg. Co., Ltd, Tokyo 103-8383 (JP); UMEDA, Keisuke, c/o Dainichiseika Mfg. Co., Ltd, Tokyo 103-8383 (JP); NAKAMURA, Michiei, c/o Dainichiseika Mfg. Co., Ltd, Tokyo 103-8383 (JP)
(74) Representative: Hartz, Nikolai
(86) International application number: PCT/JP2004/001475
(87) International publication number: WO 2004/071966

(57) **Abstract**

A desalting method for raw water with at least a water-soluble salt contained therein comprises the following first and second steps: (1) removing water from said raw water to concentrate said raw water; and (2) removing at least a part of saidwater-soluble salt from the resulting concentrated raw water. This method can conduct the desalting of raw water, which contains at least a water-soluble salt, industrially and economically.

## Description

### Technical Field

This invention relates to a method of desalting, desalted water obtained by the method, and a desalting system. More specifically, the present invention is concerned with a method of efficiently desalting water, which contains at least a water-soluble salt therein (hereinafter simply called "raw water" or "brine"), without impairing a organic valuable substance (hereinafter simply called "value" ) contained in the raw water, desalted water obtained by the method, and a desalting system.

### Background Art

Conventionally, a variety of methods have been proposed of obtaining only water from various raw waters or to remove salts from raw water. By these methods, drinking water, water useful in chemical industry and electronic industry, water useful inmedical treatments ormedicines, and water containing one or more values are produced. As apparatuses for obtaining freshwater from seawater, for example, atmospheric or vacuum evaporators, membrane filters such as reverse osmosis filters, and electrodialysis apparatuses have been put in practical use.

For the concentration or purification of raw waters containing values such as raw materials for medicines, pigments or silica sols, the above-mentioned evaporators and reverse osmosis filters, ultrafiltration membrane apparatuses, and the like are used. Further, ion exchangers and electrodialysis apparatuses are used to desalt raw water. For the production of pure water or ultrapure water, desalting systems each of which makes use of an ion-exchange resin or electrodialysis apparatus are each used in combination with a water purifying apparatus which relies upon evaporation or makes use of a reverse osmosis membrane.

Raw waters to which desalting is applied include raw waters containing one or more physiologically-active, organic or inorganic values, such as seawater and ocean deep water.

Many of the values in raw water in which the above-described physiologically-active substances (values) are contained, such as ocean deep water, are sensitive to temperature. When exposed to high temperatures during the treatment of the raw water, the values may be modified or denatured so that their functions may be reduced or lost.

Among the above-described desalting methods, the desalting of raw water by electrodialysis requires electric power in a quantity corresponding to the amount of a salt contained in the raw water. As the desalting proceeds and the concentration of the salt in the raw water hence becomes lower, the temperature of the raw water is observed to rise due to the electric resistance of the raw water, and in many instances, a value (organic substance) contained in the raw water under the desalting may be caused to undergo a modifications or denaturation, a deterioration or the like. According to the desalting of raw water by an ion exchanger, on the other hand, it is obvious that the desalting cannot be effected beyond the ion exchange ability of its ion exchange resin. When applied to the desalting of raw water with a salt contained at high concentration, the ion exchange resin requires frequent regeneration so that this method is not economical for industrial use.

As unique desalting methods permitting industrial use, methods each of which makes use of a charge mosaic membrane equipped with anionic and cationic ion channels have been proposed (JP-A-2000-309654). As will be described subsequently herein, a desalting method making use of a charge mosaic membrane does not require any thermal energy unlike the evaporation method, does not need electric energy in an amount corresponding to the quantity of salt ions unlike electrodialysis, and does not require any regeneration treatment unlike an ion exchange resin. In addition, the charge mosaic membrane is simple in structure, can be produced at low cost, requires neither a large initial investment for various facilities upon constructing a desalting system nor a high running cost, and therefore, is very economical. Moreover, the use of the charge mosaic membrane does not cause the temperature of raw water to become higher during desalting, thereby making it possible to avoid a modification or denaturation, a deterioration or the like of a value in the raw water which would otherwise take place due to a rise in the temperature of the raw water during the desalting.

Furthermore, the charge mosaic membrane is essentially a non-porous membrane, and therefore, is equipped with excellent characteristics unseen on the other separation apparatuses or methods such that the fractionation molecular weight of a substance separated by the membrane is very small and any value having a molecular weight greater than the salt in the raw water is not separated along with the salt (is not allowed to leak through the membrane).

According to the mechanism of desalting by a charge mosaic membrane, however, a desalting tank is divided into two sections by the charge mosaic membrane, raw water is charged in one of the sections as a raw water tank, freshwater is charged in the other section as a dialysis water tank, and a salt in the raw water filled in the raw water tank is then caused to migrate into the freshwater (hereinafter called "dialysis tank water") filled in the dialysis water tank. The drive force for desalting at this stage is the difference in concentration between the salt in the raw water and the salt in the dialysis tank water. When desalting raw water under atmospheric pressure by using a charge mosaic membrane, it has, therefore, been needed for the dialysis tank water to always maintain its salt concentration lower than the raw water in the raw water tank.

Basically speaking, a charge mosaic membrane still permits desalting of a salt from raw water even when the difference in concentration between the salt in the raw water and that in the dialysis tank water is small. However, the desalting rate drops as the difference in concentration between the salt in the raw water and that in the dialysis tank water becomes smaller. Even in a desalting method making use of a charge mosaic membrane, it is, therefore, necessary to feed a great deal of freshwater such as deionized water or tap water to the dialysis water tank. This is, however, not preferred from the economical standpoint when desalting is conducted industrially. Concerning the time required for salting, on the other hand, as the concentration of the salt in the raw water filled in the raw water tank becomes lower, the permeation flux of the charge mosaic membrane (the rate at which the salt permeates through the membrane) is significantly reduced so that a very long time is needed for the desalting. This has resulted in a problem for the industrial application of charge mosaic membranes.

Accordingly, a first object of the present invention is to provide a desalting method which makes it possible to conduct the desalting of raw water industrially and economically. A second object of the present invention is to provide a desalting method which in a desalting method making use of a charge mosaic membrane, makes it possible to reduce the amount of dialysis tank water to be used and also to shorten the time required for desalting. A third object of the present invention is to provide a method of desalting raw water, which contains a value, without impairing the value in the raw water.

### Disclosure of the Invention

The above-described objects can be achieved by the following methods of the present invention. Described specifically, the present invention provides a method of desalting raw water with at least a water-soluble salt contained therein, which comprises the following first and second steps:
(1) removing water from the raw water to concentrate the raw water; and
(2) removing at least a part of the water-soluble salt from the resulting concentrated raw water.

In the present invention, the first step and the second step can be conducted at the same time. The first step and the second step can each be conducted only once, or the first step and the second step can be each conducted a plurality of times either intermittently or continuously. A pretreatment step may be included before the first step as needed, an intermediate step may be included between the first step and the second step, and/or a post treatment step may be included after the second step. The raw water is requested to contain at least one kind of alkali metal ions or alkaline earth metal ions. Preferably, the raw water may have been concentrated to such extent that the concentration of a salt in it is in a range of from 10 wt.% to a saturation solubility of the salt.

In the above-describedpresent invention, the first step can be conducted by evaporation and/or by using a reverse osmosis membrane, and the second step can be conducted by using a charge mosaic membrane. As an alternative, the first step and second step can be conducted at the same time by using a nanofiltration membrane.

The raw water to be desalted in the present invention may preferably contain a value. As the value-containing raw water, seawater or ocean deep water can be mentioned. The present invention also provides desalted water obtained by the above-described method of the present invention.

In addition, the present invention also provides a desalting system comprising in combination at least one concentration unit, which is selected from a vacuum evaporator, an atmospheric evaporator, a reverse osmosis membrane unit or a nanofiltration membrane unit, and a charge mosaic membrane desalting unit. The vacuum evaporator may preferably be selected from a centrifugal-flow thin-film vacuum evaporator, a rotating heat-transfer surface vacuum evaporator, a high-speed spinning vacuum evaporator, a falling-film vacuum evaporator or a wall-scraping vacuum evaporator.

### Best Modes for Carrying out the Invention

The present invention will next be described in further detail based on certain best modes for carrying out the invention.

As raw water to which the desalting method according to the present invention is applied, water with ions of various salts contained therein can be mentioned. Among these ions of salts, at least one kind of ions consist of ions of sodium, potassium, magnesium, calcium or the like. As a representative example of raw water, sea watercan be mentioned. Upon production of freshwater or salt from seawater, surface-layer seawater (seawater in a shallow part of the sea) has been used primarily to date.

The seawater contains, in addition to ions of the above-described salts, ions of lithium, zinc, iron, copper, aluminum, manganese, molybdenum, nickel, uranium and the like. On the other hand, seawater in the deep sea of 200 m or more, which is called "ocean deep water", has been attracting interest in recent years. As the ocean deep water contains useful values (organic substances) and useful minerals, it has been used as raw materials for cosmetics, bioactive water, beverages and the like, and is also raw water useful in the present invention.

A charge mosaic membrane useful in the present invention is a membrane, which is composed of a cationic polymer component and an anionic polymer component and is equipped with ion channels extending through both the front and rear sides of the membrane and existing adjacent to each other. Through the ion channels, ions having small molecular weights (atomic weights) in raw water, for example, ions of alkali metals such as sodium and potassium migrate from the side of a raw water tank to the side of a dialysis tank water so that the raw water is desalted. The drive force for the desalting through the membrane is based on a difference in concentration between the raw water and the dialysis tank water divided from each other by the membrane and a difference between a pressure applied to the raw water and a pressure applied to the dialysis tank water. The membrane has such property that it allows ions of salts of relatively low molecular weights in the raw water to readily migrate into the dialysis tank water through the ion channels of the membrane but does not permit any migration of nonionic substances and molecules having large molecular weights (for example, organic substances) in the raw water. The use of the membrane, therefore, makes it possible to readily separate ions of salts and a value in raw water from each other. Such charge mosaic membranes have been conventionally used for the removal of salts by dialysis under atmospheric pressure and also for the removal of salts under pressure by dialysis (piezodialysis) (desalting).

Preferred as large charge mosaic membranes industrially usable in accordance with the present invention are charge mosaic membranes formed by using a crosslinked particulate polymer as at least one of charged polymer components as disclosed especially in JP-B-2681852, JP-B-2895705, JP-B-3012153, jP-B-3234426, JP-B-3236754 and JP-B-3156955.

According to the descriptions of the patent publications cited in the above, the rating of salt-dialyzing property of a charge mosaic membrane is conducted as will be described next. Firstly, a desalting apparatus making use of the charge mosaic membrane is constructed. Charged in its raw water tank is an aqueous solution (equivalent to raw water) in which the concentration of potassium chloride as an electrolyte has been adjusted to 0.05 mol/L and the concentration of glucose (molecularweight: 180) as a non-electrolyte has been adjusted to 0.05 mol/L is charged. Deionized water is charged in a dialysis water tank of the system. The apparatus is left over in this state under atmospheric pressure so that potassium chloride is allowed to migrate to the side of the dialysis water tank. In this manner, the dialysis property of the charge mosaic membrane is ranked. The charge mosaic membrane showed excellent separation performance for the raw water with potassium chloride and glucose contained therein. The permeation flux of potassium chloride was, however, 45 g/m²h upon elapsed time of 1 hour after the initiation of the dialysis .

In the present invention, an investigation was then conducted for the dialysis property of a charge mosaic membrane when the concentration of potassium chloride in the raw water was increased to 60 times (3 mol/L (about 20 wt.%)). The permeation flux of potassium chloride was found to be 959 g/m²h upon elapsed time of 1 hour after the initiation of the dialysis and 714 g/m²h upon elapsed time of 4 to 5 hours after the initiation of the dialysis. A difference (mol/L) between the concentration of the salt in the raw water and the concentration of the salt in the dialysis tank water and a permeation flux (g/m²h) as an index of a dialysis rate of the salt were measured with time, and were plotted on log-log graph paper. A substantially straight line was drawn between the concentration differences of the salt and their corresponding permeation fluxes, thereby indicating the existence of a proportional correlation between them. This indicates that the dialysis rate increases as the concentration of the salt in the raw water becomes higher and the difference the concentration of the salt between the raw water and the dialysis tank water becomes greater.

It has, therefore, been found that the problems arisen upon using a charge mosaic membrane in an industrial desalting method, specifically the problem of the need for a great deal of freshwater as dialysis tank water and the problem of the need for a long time for the dialysis of a salt (desalting) can be resolved by increasing the concentration of the salt in raw water. When increasing the concentration of the salt in the raw water, it is preferred to concentrate the raw water without modifying or denaturing a solute (for example, an organic substance) as a value in the raw water. Concentration of the raw water obviously can reduce the volume of the raw water; as the concentration of the salt in the raw water increases; the permeation flux of the salt increases upon desalting as described above; it is, as results, possible to conduct the desalting of the raw water in a short time.

Upon desalting, specifically upon taking raw water, during transportation or storage of the raw water or in the course of its desalting, concentration or subsequent processing or treatment, microorganisms such as bacteria may mix in the raw water from the air or the production system; as a result, the raw water is contaminated; and the microorganisms may grow in the raw water. Insofar as ordinary raw water is concerned, it can be sterilized, for example, by chlorine sterilization or oxygen sterilization or by adding a bacteriocide. When the raw water contains a value (for example, an organic substance) and the value is to be used, it is not desired for the raw water to contain any bacteriocide which has a potential problem of modifying or denaturing the value.

It has been found that according to the present invention, microorganisms such as bacteria mixed in raw water can be sterilized by concentrating the raw water to increase the concentration of salts in the raw water without conducting sterilization treatment of the raw water or adding a bacteriocide to the raw water as described above.

In general, there is an environment suited for the growth or survival of microorganisms such as bacteria. Especially as to the concentration of salts, there is a limitation for the survival or growth of microorganisms. An increase in the concentration of salts inhibits the growth of microorganisms such as bacteria, and a further increase in the concentration of salts does not allow the microorganisms to survive any longer. A limit of the concentration of salts, below which a microorganism can survive or grow, differs depending upon the species of the microorganism such as bacteria, and cannot be specified in any wholesale manner. In the case of brine (raw water), microorganisms entered the brine can be fully caused to die out by increasing the concentration of salts to 10 wt.% or higher in the brine. Microorganisms such as bacteria are considered to die out in brine containing salts at high concentration, because the intracellular water leaks out into the high-concentration raw water due to a difference in osmotic pressure from the outside of the cells.

When the raw water is seawater, especially ocean deep water, it is considered that microorganisms such as bacteria inherently contained in the ocean deep water exist in a bacteriostatic state in the ocean deep water taken as raw water and that the microorganisms have adapted themselves to the environment of brine and have naturalized themselves to the ocean deep water as brine. Microorganisms can, therefore, still survive in ocean deep water of the above-described concentration of salt (10 wt.%). It has, however, been found that microorganisms such as bacteria in ocean deep water can be caused to substantially die out by increasing the concentration of salts further, for example, to 15 wt.% or 20 wt.% in the ocean deep water. The concentration of a salt in raw water, which assures as a premise the substantial kill of microorganisms such as bacteria, may be in a range of from 10 wt.% to the saturation solubility of the salt, preferably from 15 wt.% to the saturation solubility of the salt, more preferably from 20 wt.% to the saturation solubility of the salt. In this manner, the present invention makes it possible to desalt ocean deep water in an aseptic state and to obtain desalted water with one or more values contained therein. It is also possible to ensure the sterilization of microorganisms by performing UV irradiation as needed.

A description will next be made about specific modes for carrying out the desalting method according to the present invention.
(A) Deionized (desalted) water can be obtained by conducting a first step of removing water from raw water, which contains at least a water-soluble salt, to concentrate the raw water, and then, a second step of desalting the raw water, which has been concentrated in the first step, through a charge mosaic membrane under atmospheric pressure or elevated pressure. These first step and second step can each be conducted only a single cycle or a plurality of times. The above-described concentration of the raw water can be conducted, for example, by using a reverse osmosis filter or a reduced-pressure evaporator such as a centrifugal-flow thin-film vacuum evaporator. The water (for example, evaporated water) obtained by the concentration of the raw water in the above-described method can be used as dialysis tank water upon desalting or to adjust the concentration of the salt or the concentration of a value in the resulting desalted water.
(B) Deionized(desalted) water can be obtained by conducting, as a pretreatment for conducting the method of the present invention, a step of desalting raw water, especially raw water with 1% or more of a salt contained therein, through a charge mosaic membrane under atmospheric pressure or elevated pressure to prepare desaltedwater lowered in the concentration of the salt; and then, a first step of providing the desalted water as raw water and removing water from the desalted water to concentrate the desalted water, and then, the second step. When ocean deep water is provided as raw water, for example, the ocean deep water is desalted, as is, through a charge mosaic membrane, the resulting desalted water is then concentrated through a reverse osmosis membrane or by a reduced-pressure evaporator, and then, the second step is conducted. By repeating these steps, it is possible to obtain desalted water with values, which the ocean deep water originally contained, being contained therein as are.
(C) "When value(s) in raw water is intended to be concentrated"
   Desalted water, which is low in the concentration of a salt but is high in the concentration of a value, can be obtained by conducting a step of taking the.salt and water out of raw water, which contains the value, through a nanofiltration membrane to increase the concentration of the value in the raw water, and then, a step of desalting the raw water, in which the concentration of the value has been increased, through a charge mosaic membrane. For example, ocean deep water, which contains values at high concentrations and has been desalted, can be obtained by separating salts and water through a nanofiltration membrane from ocean deep water to convert it into ocean deep water with the values contained at high concentrations, and then desalting the resultant ocean deep water.
(D) "When value(s) in raw water is intended to be concentrated"
   Desalted water, which is high in the concentration of a value but is low in the concentration of a salt, can be obtained by conducting a step of taking the salt and water out of raw water (for example, ocean deep water), which contains the value, through a nanofiltration to increase the concentration of the value in the raw water, and then, taking water and the salt out of the raw water, in which the concentration of the value is high, through a nanofiltration membrane while adding pure water to the raw water.
(E) Desalted water with a value contained therein can be obtained by concentrating or diluting with freshwater the desalted water or value-containing desalted water, which has been obtained by the above-described method, such that the concentration of the value is adjusted.

The above-described methods A to E can each be conducted only a single cycle or a plurality of times.

In the above-described concentration step as the first step, evaporation can be used to remove water or a reverse osmosis membrane can be employed to separate water. Preferred as an evaporation method is atmospheric evaporation or, when raw water to be evaporated contains a substance or substances sensitive to temperatures, reduced-pressure evaporation is preferable. It is possible to use, for example, a vacuum evaporator of the fixed heat-transfer surface type such as the high-speed spinning type, the falling-film type, the pumping and sprinkling type or the wall-scraping type; or a vacuum evaporator of the rotating heat-transfer surface type such as a centrifugal-flow thin-film vacuum evaporator. As these evaporators, known evaporators can be used. As will be described subsequently herein, however, the concentration of raw water by its heating requires to select materials for the evaporator while paying attention to the occurrence of rust on the evaporator and corrosion of the evaporator with the high-concentration raw water.

As the desalting method making use of a charge mosaic membrane, a desalting dialysis method under atmospheric pressure or a piezo desalting dialysis method under elevated pressure can be used. As the manner of contact between raw water and dialysis tank water, various methods can be selectively used including the batch method, the continuous method, the circulation method, the single-pass method, the counter-flow method, and the parallel flow method. When raw water of high salt concentration is desalted by any one of these methods, the amount of freshwater to be used as dialysis tank water can be reduced by using brine of low salt concentration in place of freshwater as the dialysis tank water.

The system according to the present invention for the production of desalted water or value-containing desalted water is constructed by selecting and combining a raw water reservoir, a pretreatment unit, a reduced-pressure concentration unit, a reverse osmosis membrane concentration unit, a nanofiltration membrane concentration unit, a charge mosaic membrane desalting unit, an electrodialyzer, a dialyzed brine receptacle tank, a dialyzed freshwater receptacle tank, a desalted water receptacle tank, and a group of accessory equipment.

Materials for use in each of these equipment, especially equipment or members to which high-concentration brine is brought into contact in the evaporation and concentration step, such as a centrifugal-flow thin-film vacuum evaporator, for example, a heat exchanger for heating brine, evaporator surfaces for brine, and piping have to be selected while keeping in mind rust and corrosion with brine. Preferred examples of these materials include SUS316L, NAS354N (high-nickel austenite stainless steel), Hastelloy C-22 (nickel-chromium-molybdenum alloy), titanium, and glass (glass lining).

The desalting method and desalting system according to the present invention are useful, for example, for the desalting of various brines in water treatment industries for drinking water, pure water, ultrapure water, industrial water and the like, the desalting of various brines produced in biochemistry-related industries such as the fermentation industry and the food industry, the desalting of salt-containing raw materials for medicines, the desalting of salt-containing, industrial effluents in the chemical industry, the metal industry and the like, and the desalting of salt-containing dyes and pigments in the colorant production industry.

In particular, the desalting method by a charge mosaic membrane, said method being useful in the present invention, neither heats raw water nor gives off heat upon desalting, and therefore, is useful for the desalting of ocean deep water containing values and for the desalting of various brines in the fields of the food industry and fermentation industry which tend to be affected by heat. If the desalting of such brines are conducted by conventional electrodialysis, values (target substances) undergo decompositions, modifications or denaturations due to the heat produced during the treatments. The desalting making use of an ion exchange membrane has the problem that the ion exchange membrane is fouled due to ionic adsorption. According to the present invention, however, the above-described problems of the conventional techniques can be resolved.

Ocean deep water with values and valuable minerals contained therein is considered to have effectiveness for eosinophils the number of which increases upon onset of atopic dermatitis or an allergic reaction, and is also considered to have a biological activity for fibroblasts and effectiveness for the humectic and antimicrobial functions of the skin. These effectiveness were reported in "Property Search and Function Investigation on Muroto Ocean Deep Water " (March, 1999), a report of results on government-entrusted and -sponsored, comprehensive research on science and technology: local and region-based guidance research in 1998 and "Overall Property Search and Function Investigation on Muroto Ocean Deep Water over Three Years" (March, 2001) , a report of results on government-entrusted and -sponsored, comprehensive research on science and technology: local and region-based guidance research in 1998-2000, published by The Kochi Industrial Promotion Center Foundation. Value-containing, desalted water obtained by the process of the present invention, especially its concentrated water is effective particularly as a moistening water or pack solution for the treatment of skin cells injured by skin disease, skin defect or skin deficiency, an impregnation solution for gel poultices, or a culture solution ingredient of a culture medium for cultured skins.

The followings are most specific embodiments of the present invention, although the present invention is not limited to the following embodiments.
(1) A method of desalinating ocean deep water, which comprises the following steps: concentrating the ocean deep water by reduced-pressure evaporation until a concentration of a salt reaches a range of from 10 wt.% to a saturation solubility of the salt; desalting the resulting concentrated ocean deep water through a charge mosaic membrane until the concentration of the salt is lowered to from 0.5 to 12 wt.%; concentrating the resulting desalted ocean deep water again by reduced-pressure evaporation until the concentration of the salt reaches a range of from 10 wt.% to the saturation solubility of the salt; and desalting the resulting concentrated ocean deep water through a charge mosaic membrane until the concentration of the salt is lowered to from 0.1 to 1.0 wt.%.
(2) A method of desalinating ocean deep water, which comprises the following steps: concentrating the ocean deep water through a reverse osmosis membrane until a concentration of a salt reaches a range of from 5 to 7 wt.%; concentrating the resulting concentrated ocean deep water further by reduced-pressure evaporation until the concentration of the salt reaches a range of from 10 wt.% to the saturation solubility of the salt; and desalting the resulting concentrated ocean deep water through a charge mosaic membrane until the concentration of the salt is lowered to from 0.1 to 1.0 wt.%.
(3) A method of desalinating ocean deep water, which comprises the following steps: concentrating the ocean deep water through a nanofiltration membrane until its volume is decreased to from 1/5 to 1/50; and desalting the resulting concentrated ocean deep water through a charge mosaic membrane until the concentration of the salt is lowered to from 0.1 to 1.0 wt.%.

It is to be noted that each of the steps in each of the above-exemplified embodiments can be conducted repeatedly twice or more as needed.

### Examples

Based on the following examples, the present invention will be described more specifically. It is to be noted that the designations of "part", "parts" and "%" in the following examples are each on a weight basis unless otherwise specifically indicated.

### Example 1

(1) Construction of a desalting system for value-containing raw water
   A desalting system was constructed by arranging a raw water reservoir, a pretreatment unit, a reduced-pressure evaporator/concentration unit, an evaporated freshwater receptacle tank, a brine receptacle tank, a charge mosaic membrane desalting unit, a desalted water receptacle tank, a water reservoir for a dialysis water tank, a dialysis water receptacle tank, and their accessory equipment.
(2) Concentration of ocean deep water by reduced-pressure evaporation
   A centrifugal-flow thin-film vacuum evaporator was used as the reduced-pressure evaporator. That evaporator had, as an evaporating element, a rotary evaporation disk making use of SUS316L, and was of the design that by rotating the evaporation disk at high speed, ocean deep water flowed out of a central pipe was formed into a thin film and was caused to evaporate. Ocean deep water (salt concentration: about 3.5%; 2, 000 kg) was charged as raw water in the above-described reduced-pressure evaporator, the interior of the evaporator was reduced in pressure to about 4 kPa, and reduced-pressure evaporation was conducted at about 30°C to 40°C. The evaporation was conducted until the volume of the raw water was decreased to approximately one third, that is, 700 kg. The salt concentration of the resulting, concentrated raw water (concentrated solution) was about 10%. The yield of the evaporated water (freshwater) was about 1,300 kg. The concentrated solution was measured for its total carbon content (TOC). The TOC value of the concentrated solution was 2.9 ppm as opposed to 1 ppm, the TOC value of the raw water before the concentration.
(3) Desalting of concentrated ocean deep water (concentrated raw water) through charge mosaic membranes
   A flat charge mosaic membrane desalting apparatus was provided. Raw water tanks, into which raw water was to be charged, and dialysis water tanks, into which dialysis water was to be charged, were alternately arranged, and between the individual raw water tanks and their corresponding dialysis water tanks, flat charge mosaic membranes having a desalting effective area of 0.1 m² were held in packings and fixed as many as 100 membranes in total. The individual raw water tanks were connected in parallel with each other, and the individual dialysis water tanks were also connected in parallel with each other. Piping was arranged such that raw water fed by a pump from a raw water reservoir tank and dialysis water fed by a pump from a dialysis water reservoir tank were allowed to circulate through the plural raw water tanks and the plural dialysis water tanks, respectively. In the raw water tanks, the concentrated solution of 10% salt concentration (700 kg) obtained in the above procedure (2) was charged in the raw water tanks. Deionized water was charged in the dialysis water tanks and was circulated to conduct desalting. Variations in the salt concentration of the raw water were monitored by measuring variations in the electrical conductivity of the raw water. The desalting was conducted until the salt concentration dropped to approximately 2%. At that time point, the TOC value of the dialysis tank water showed 0 ppm, and substantially no organic values in the raw water were removed by the dialysis.
   Incidentally, the preparation of the charge mosaic membranes used in the above procedure was conducted on the basis of the disclosure of JP-A-2000-309654 as will be described hereinafter. Provided were a crosslinked copolymer (average particle size: about 350 nm) of 4-vinylpyridine and divinylbenzene (molar ratio: 10:1) as a cationic microgel and the sodium salt (average particle size: 240 nm) of a sulfonated product of a crosslinked copolymer of styrene, acrylonitrile, hydroxyethyl methacrylate and divinylbenzene (molar ratio: 41.6:7.1:8.1:8.7) as an anionic gel. A coating formulation, which contained a composition of the cationic microgel, the anionic microgel and a separately-provided, hydrogenation product of an acrylonitrile-butadiene resin (weight ratio: 3:7:10), was evenly applied to a nonwoven polyester fabric to give a dry membrane thickness of about 30 µm, and was then dried. The resulting membrane was left over in an atmosphere of methyl iodide to convert the pyridine moiety of the 4-vinylpyridine into a quaternary pyridinium salt moiety. Post treatments such as washing were then conducted to obtain a charge mosaic membrane reinforced with the non woven polyester fabric.
(4) Secondary concentration by reduced-pressure evaporation and secondary desalting through charge mosaic membranes
   The brine (700 kg), which were obtained in the above-described procedure (3) and had a salt concentration of 2%, was charged in a reduced-pressure evaporator, and in a similar manner as in the above-described procedure (2) , its secondary concentration was conducted by reduced-pressure evaporation. The evaporation was conducted until the volume of the brine was decreased to approximately one fifth, that is, 140 kg. The salt concentration of the resulting concentrated solution was approximately 10%. In a similar manner as in the above procedure (3), secondary desalting was conducted by a charge mosaic membrane desalting apparatus. The secondary desalting was conducted until the salt concentration of the raw water dropped to 0.28%. The TOC value of the desalted water was indicated approximately the value of 14 ppm. The TOC value in the dialysis tank water during the desalting indicated values of from 1 to 0 ppm. The volume of the eventually-obtained, desalted water was 1 over 14.3 of the initial ocean deep water as the raw water.
(5) Adjustment of a concentration rate by dilution with water
   To the desalted water (140 kg) obtained in the above procedure (4) and having a salt concentration of 0.28%, the evaporated water (60 kg) obtained above in the procedure (2) and derived from the ocean deep water was added for dilution. The thus-diluted solution had a salt concentration of 0.2%, and contained soluble values, which showed effective bioactivities of as much as about 10 ppm in terms of TOC value.
(6) Concentration of the dialysis tank water
   The dialysis tank water used in the charge mosaic membrane desalting apparatus in the above procedure (3) , said dialysis tank water containing the salt desalted from the raw water, was concentrated further by an electrolysis apparatus and a concentration apparatus to obtain table salt derived from brine and ocean deep water.

### Example 2

(1) Construction of a desalting system for value-containing raw water
   A desalting system was constructed by arranging a raw water reservoir, a pretreatment unit, a reduced-pressure evaporation/concentration unit, an evaporated freshwater receptacle tank, a brine receptacle tank, a charge mosaic membrane desalting unit, a desalted water receptacle tank, a water reservoir for a dialysis water tank, a dialysis water receptacle tank, a UV sterilizer, and their accessory equipment.
(2) Concentration of ocean deep water by reduced-pressure evaporation
   As a reduced-pressure evaporator, the same evaporator as that used in Example 1 was employed. Ocean deep water (2, 000 kg) was charged as raw water in the reduced-pressure evaporator, the interior of the evaporator was reduced in pressure to about 4 kPa, and reduced-pressure evaporation was conducted at about 30°C to 40°C. The evaporation was conducted until the volume of the raw water was decreased to approximately one eighth, that is, 269 kg. The salt concentration of the solution concentrated by the evaporation was about 26%. The yield of the evaporated water (freshwater) was about 1,731 kg. The TOC value of the concentrated water was 7.4 ppm. The viable cell count of the concentrated water was found to be substantially zero.
(3) Desalting of concentrated ocean deep water through charge mosaic membranes
   The same flat charge mosaic membrane desalting apparatus as that used in Example 1 was employed. In the raw water tank, the deep seawater (269 kg) obtained in the above procedure (2) and having a salt concentration of 26% was charged as raw water to be desalted. Evaporated water, which had been sterilized by UV irradiation, was charged in the dialysis water tank, and was caused to continuously flow so that desalting was conducted. The desalting was conducted until the salt concentration of the raw water dropped to approximately 12%.
(4) Secondary concentration by reduced-pressure evaporation and secondary desalting through charge mosaic membranes
   The brine (296 kg), which were obtained in the above-described procedure (3) and had a salt concentration of 12%, was charged in a reduced-pressure evaporator, and in a similar manner as in the above-described procedure (2) , its secondary concentration was conducted by reduced-pressure evaporation. The evaporation was conducted until the volume of the brine was decreased to approximately a half, that is, 124 kg. The salt concentration of the resulting concentrated solution was approximately 26%. The viable cell count of the secondary concentration water was found to be substantially zero. In a similar manner as in the above procedure (3), secondary desalting was conducted by a charge mosaic membrane desalting apparatus. The secondary desalting was conducted until the salt concentration of the solution dropped to 0.80%. The TOC value of the desalted water was indicated approximately the value of 16 ppm. The TOC value in the dialysis tank water during the desalting indicated values of from 1 to 0 ppm. Further, the volume of the solution after the above-described desalting was decreased to 1 over 16.1(1/16.1) of the initial ocean deep water as the raw water.
(5) Adjustment of a concentration rate by dilution with water
   To the desalted water (124 kg) obtained in the above procedure (4) and having a salt concentration of 0.80%, the evaporated water (76 kg) obtained above in the procedure (2) and derived from the.ocean deep water was added for dilution subsequent to its sterilization by UV irradiation. The thus-diluted solution had a salt concentration of 0.5%, and contained values, which showed effective bioactivities, as much as about 10 ppm in terms of TOC value. The viable cell count of the value-containing, desalted water was found to be substantially zero.

### Example 3

(1) Construction of a desalting system for value-containing raw water
   A desalting system was constructed by arranging a raw water reservoir, a pretreatment unit, a reverse osmosis filter, a reverse-osmosis brine receptacle tank, a reverse-osmotic dialysis freshwater receptacle tank, a reduced-pressure evaporation/concentration unit, an evaporated freshwater receptacle tank, a brine receptacle tank, a charge mosaic membrane desalting unit, a desalted water receptacle tank, a water reservoir for a dialysis water tank, a dialysis water receptacle tank, and their accessory equipment.
(2) Concentration of ocean deep water by a reverse osmosis membrane
   Using a reverse osmosis filter as a concentration unit, ocean deep water (4, 000 kg) was concentrated under a pressure of 60 kg/cm². The concentration was conducted until the volume of the solution was decreased to approximately a half, that is, 2,000 kg. The salt concentration of the concentrated solution was approximately 7%. The yield of freshwater upon that concentration was about 2,000 kg.
(3) Secondary concentration by reduced-pressure evaporation
   Secondary concentration of the concentrated solution obtained in the above-described procedure (2) was conducted using a centrifugal-flow thin-film vacuum evaporator in a similar manner as in the procedure (2) of Example 1. The secondary concentration was conducted until the volume of the solution was decreased to approximately one third, that is, 700 kg. The salt concentration of the concentrated solution was about 20%. The yield of the evaporated water was about 1,300 kg.
(4) Desalting of concentrated ocean deep water through charge mosaic membranes
   Desalting of the concentrated solution obtained in the above-described procedure (3) was conducted by using a charge mosaic membrane desalting apparatus in a similar manner as in the procedure (3) of Example 1.
(5) Secondary concentration by reduced-pressure evaporation and secondary desalting through charge mosaic membranes
   Secondary concentration of the desalted water obtained in the above-described procedure (4) was conducted by using a centrifugal-flow thin-film vacuum evaporator in a similar manner as in the procedure (2) of Example 1, and secondary desalting was conducted by a charge mosaic membrane desalting apparatus in a similar manner as in the procedure (3) of Example 1.
(6) Adjustment of a concentration rate by dilution with water
   The evaporated water obtained in the above-described procedure (2) or (3) and derived from the ocean deep water was added to the desalted water, which had been obtained in the above-described procedure (5), to dilute the desalted water such that its concentration rate, salt concentration or value concentration was rendered consistent with a desired value.

### Example 4

(1) Construction of a desalting system for value-containing raw water
   A desalting system was constructed by arranging a raw water reservoir, a pretreatment unit, a nanofiltration membrane filter, a nanofiltered water receptacle tank, a charge mosaic membrane desalting unit, a desalted water receptacle tank, a water reservoir for a dialysis water tank, a dialysis water receptacle tank, and their accessory equipment.
(2) Desalting and concentration of ocean deep water by a nanofiltration membrane
   Using the nanofiltration membrane filter, desalting and concentration of ocean deep water (2, 000 kg) as raw water were conducted under a pressure of 20 kg/cm². The desalting and concentration were conducted until the volume of the raw water was decreased to approximately one twenties, that is, 100 kg. The salt concentration of the concentrated solution was approximately 4%.
(3) Desalting of concentrated ocean deep water through charge mosaic membranes
   Desalting of the concentrated solution obtained in the above-described procedure (2) was conducted by using a charge mosaic membrane desalting apparatus in a similar manner as in the procedure (3) of Example 1, and desalted water was obtained.
(4) Adjustment of a concentration rate by dilution with water
   Freshwater derived from ocean deep water was added to the desalted water, which had been obtained in the above-described procedure (3), in a similar manner as in the procedure (5) of Example 1 to dilute the desalted water such that its concentration rate, salt concentration or value concentration had a desired value. Instead of the freshwater, the nanofiltered brine obtained in the above-described procedure (2) or the freshwater obtained as a result of the evaporation by the centrifugal-flow thin-film vacuum evaporator in the procedure (4) of Example 1 or the treatment by the reverse osmosis filter in the procedure (3) of Example 3 can also be used.

### Industrial Applicability

The present invention has the following industrial applicability:
(1) The desalting of raw water can be performed industrially and economically.
(2) The use of the desalting method, which makes use of a charge mosaic membrane, can reduce the amount of dialysis tank water to be used, and can also shorten the desalting time. Moreover, water available during concentration can be used as dialysis tank water.
(3) In the desalting of raw water with one or more values contained therein, the raw water can be desalted without impairing the values in the raw water.

## Claims

1. A method of desalting raw water with at least a water-soluble salt contained therein, which comprises the following first and second steps:
(1) removing water from said raw water to concentrate said raw water; and
(2) removing at least a part of said water-soluble salt from the resulting concentrated raw water.

2. The method of claim 1, wherein said first step and second step are conducted at the same time.

3. The method of claim 1, wherein said raw water contains at least one kind of alkali metal ions or alkaline earth metal ions.

4. The method of claim 1, wherein said concentrated raw water has a salt concentration in a range of from 10 wt.% to a saturation solubility of said salt.

5. The method of claim 1, wherein said first step is conducted by evaporation and/or by using a reverse osmosis membrane.

6. The method of claim 1, wherein said second step is conducted by using a charge mosaic membrane.

7. The method of claim 2, wherein said first step and second step are conducted at the same time by using a nanofiltration membrane.

8. The method of claim 1, wherein said raw water contains a value.

9. The method of claim 1, wherein said raw water is seawater or ocean deep water.

10. A method of desalinating ocean deep water, which comprises the following steps:
concentrating said ocean deep water by reduced-pressure evaporation until a concentration of a salt reaches a range of from 10 wt.% to a saturation solubility of said salt;
desalting the resulting concentrated ocean deep water through a charge mosaic membrane until said concentration of said salt is lowered to from 0.5 to 12 wt.%;
concentrating the resulting desalted ocean deep water by reduced-pressure evaporation until said concentration of said salt reaches a range of from 10 wt.% to said saturation solubility of said salt; and
desalting the resulting concentrated ocean deep water through a charge mosaic membrane until said concentration of said salt is lowered to from 0.1 to 1.0 wt.%.

11. A method of desalinating ocean deep water, which comprises the following steps:
concentrating said ocean deep water through a reverse osmosis membrane until a concentration of a salt reaches a range of from 5 to 7 wt.%;
concentrating the resulting concentrated ocean deep water further by reduced-pressure evaporation until said concentration of said salt reaches a range of from 10 wt.% to said saturation solubility of said salt; and
desalting the resulting concentrated ocean deep water through a charge mosaic membrane until said concentration of said salt is lowered to from 0.1 to 1.0 wt.%.

12. A method of desalinating ocean deep water, which comprises the following steps:
concentrating said ocean deep water through a nanofiltration membrane until its volume is decreased to 1/5 to 1/50; and
desalting the resulting concentrated ocean deep water through a charge mosaic membrane until said concentration of said salt is lowered to from 0.1 to 1.0 wt.%.

13. Desalted water obtained by the method of any one of claims 1-12.

14. A desalting system comprising in combination at least one concentration unit, which is selected from a vacuum evaporator, an atmospheric evaporator, a reverse osmosis membrane unit or a nanofiltration membrane unit, and a charge mosaic membrane desalting unit.

15. The desalting system of claim 14, wherein said vacuum evaporator is selected from a centrifugal-flow thin-film vacuum evaporator, a rotating heat-transfer surface vacuum evaporator, a high-speed spinning vacuum evaporator, a falling-film vacuum evaporator or a wall-scraping vacuum evaporator.
